# EUROPÄISCHE PATENTSCHRIFT

(11) **EP 1 893 876 B1**
(45) Veröffentlichungstag und Bekanntmachung des Hinweises auf die Patenterteilung: **02.03.2011**
(21) Anmeldenummer: 06742715.3
(22) Anmeldetag: 27.04.2006
(51) Int. Cl.: F16B 37/08

(54) **VORRICHTUNG ZUM BEFESTIGEN WENIGSTENS EINES GEGENSTANDES AN EINEM MIT EINEM BEFESTIGUNGSBOLZEN VERSEHENEN TRÄGERTEIL**
DEVICE FOR FASTENING AT LEAST ONE OBJECT TO A SUPPORTING PART PROVIDED WITH A FASTENING BOLT
DISPOSITIF POUR FIXER AU MOINS UN OBJET SUR UNE PARTIE SUPPORT MUNIE D'UN BOULON DE SERRAGE

(30) Priorität: 10.06.2005 DE 102005026855
(43) Veröffentlichungstag der Anmeldung: 05.03.2008
(73) Patentinhaber: A. RAYMOND ET CIE, 38000 Grenoble (FR)
(72) Erfinder: SEDIVY, Jiri, 466 05 Jablonec nad Nisou (CZ); GIRAUD, Sylvain, F-38130 Echirolles (FR)
(74) Vertreter: Rüttgers, Joachim
(86) Internationale Anmeldenummer: PCT/EP2006/003897
(87) Internationale Veröffentlichungsnummer: WO 2006/131174

(56) Entgegenhaltungen:
- WO-A-02/097315
- DE-A1- 10 357 450
- US-A1- 2003 010 874

## Beschreibung

Die Erfindung betrifft eine Vorrichtung gemäß dem Oberbegriff des Patentanspruches 1.

Eine derartige Vorrichtung ist aus der US 2003/0010874 A1 bekannt. Die vorbekannte Vorrichtung zum Befestigen wenigstens eines Gegenstandes an einem mit einem Befestigungsbolzen versehenen Trägerteil verfügt über eine Eingriffsanordnung, die mit dem Befestigungsbolzen in Eingriff bringbar ist. Weiterhin ist ein die Eingriffsanordnung umgebender Außenkäfig vorhanden, wobei die Eingriffsanordnung an einem würfelartigen Innenkäfig angebracht ist, der innerhalb des Außenkäfigs angeordnet ist. Der Innenkäfig ist über acht an den acht äußeren Ecken des Innenkäfigs angeordnete, gebogene flexible Anbindungsstücke mit dem Außenkäfig verbunden, die innerhalb des im Bereich der Anbindungsstücke umfänglich geschlossenen Außenkäfigs liegen.

Aus DE 103 57 450 A1 ist eine Vorrichtung zum Befestigen wenigstens eines Gegenstandes an einem mit einem Befestigungsbolzen versehenen Trägerteil bekannt, bei der der Befestigungsbolzen durch eine konische Ausnehmung hindurch in einen Innenkäfig einfügbar ist. Zum Eingriff mit dem Befestigungsbolzen ist eine Federmutter nach Art einer Abdeckplatte im Bereich der konischen Ausnehmung angeordnet.

Aus DE 196 34 309 A1 ist eine Vorrichtung bekannt, die über eine Eingriffsanordnung verfügt, die mit einem Befestigungsbolzen in Eingriff bringbar ist. Die Eingriffsanordnung ist dabei von einem Außenkäfig umgeben, an dem eine Halteanordnung für zu befestigende Gegenstände, insbesondere Leitungen, angesetzt ist.

Der Erfindung liegt die Aufgabe zugrunde, eine Vorrichtung der eingangs genannten Art anzugeben, bei der ein effizienter Toleranzausgleich gegenüber der Position sowie der Ausrichtung des Befestigungsbolzens erzielt ist.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung vier gebogene Anbindungsstücke vorhanden sind, die paarweise diagonal einander gegenüber liegend angeordnet sind, lassen sich die Anbindungsstücke weitgehend frei innerhalb des Außenkäfigs bewegen, so dass sowohl ein effizienter Toleranzausgleich gegenüber der seitlichen Position als auch der Ausrichtung des Befestigungsbolzens gegenüber dem Trägerteil erzielt ist, da sich der Innenkäfig gegenüber dem Außenkäfig verhältnismäßig leicht sowohl seitlich versetzen als auch tordieren lässt.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vor teile. Es zeigen:
- Fig. 1: in einer perspektivischen Ansicht ein Ausführungsbeispiel einer erfindungsgemäßen Vorrichtung,
- Fig. 2: das Ausführungsbeispiel gemäß Fig. 1 in einem Schnitt rechtwinklig zu einer Einführrichtung eines Befestigungs- bolzens und
- Fig. 3: das Ausführungsbeispiel gemäß Fig. 1 in einem weiteren Schnitt, der rechtwinklig zu dem Schnitt von Fig. 2 liegt.

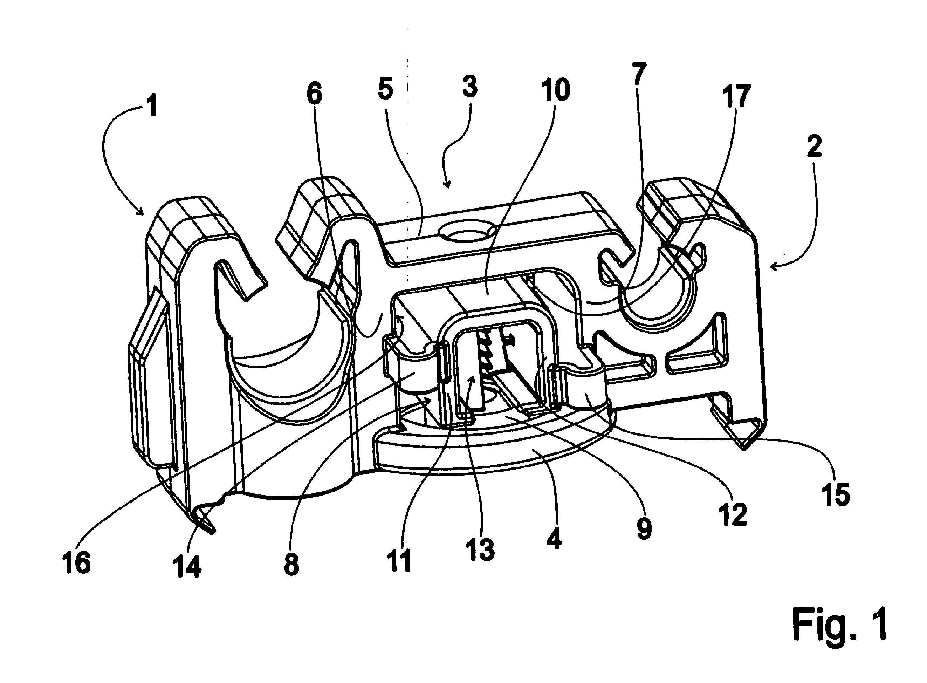

Fig. 1 zeigt in der perspektivischen Ansicht ein Ausführungsbeispiel einer erfindungsgemäßen Vorrichtung, das über an sich bekannte Halteanordnungen 1, 2 verfügt, in denen als vorzugsweise längliche Gegenstände beispielsweise Leitungen in Gestalt von elektrischen Leitungen oder Fluidleitungen befestigbar sind. Die Halteanordnungen 1, 2 stehen mit einem Außenkäfig 3 in Verbindung, der ein ringförmiges Bodenteil 4, ein in einem Abstand von dem Bodenteil 4 angeordnetes Deckteil 5 und zwei das Bodenteil 4 und das Deckteil 5 verbindende Seitenteile 6, 7 verfügt.

Innerhalb des Außenkäfigs 3 ist ein Innenkäfig 8 angeordnet, der über ein ringförmiges Bodenteil 9, ein abgeflachtes Deckteil 10 und zwei das Bodenteil 9 und das Deckteil 10 verbindende Seitenteile 11, 12 verfügt. Innerhalb des Innenkäfigs 8 ist eine Eingriffsanordnung 13 vorhanden, die mit einem in Fig. 1 nicht dargestellten Befestigungsbolzen, der typischerweise an einem in Fig. 1 ebenfalls nicht dargestellten Trägerteil angebracht ist, in Eingriff bringbar ist. Weiterhin verfügt die erfindungsgemäße Vorrichtung über eine Anzahl von gebogenen flexiblen Anbindungsstücken 14, 15, 16, 17, wobei bei dem dargestellten Ausführungsbeispiel zwei Anbindungsstücke 14, 15 auf der in der Darstellung gemäß Fig. 1 vorderen Seite und zwei Anbindungsstücke 16, 17 auf der in der Darstellung gemäß Fig. 1 hinteren Seite angeordnet sind. Somit ist der Innenkäfig 8 in Bezug auf den Außenkäfig 3 in einem Abstand beweglich gelagert.

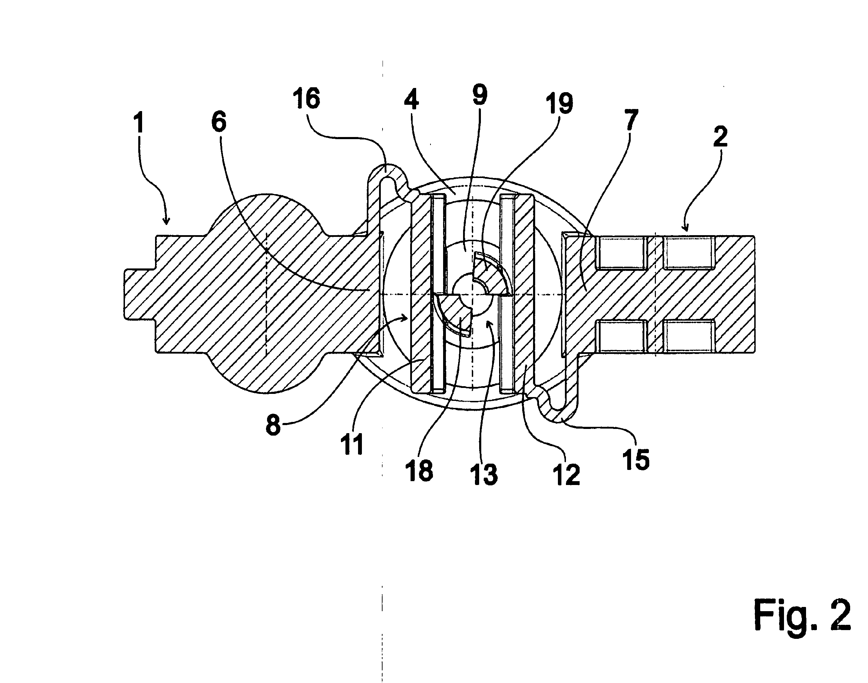

Fig. 2 zeigt das Ausführungsbeispiel gemäß Fig. 1 in einem Schnitt rechtwinklig zu einer Einführrichtung eines Befestigungsbolzens in einer Höhe, in der die den Bodenteilen 4, 9 benachbart angeordneten Anbindungsstücke 15, 16 liegen. Aus Fig. 2 ist ersichtlich, dass die jeweils gleichartig ausgebildeten Anbindungsstücke 14, 15, 16, 17 nach außen gebogen sind, wobei sie paarweise in zwei zueinander versetzten Ebenen beidseitig des Innenkäfigs 8 diagonal einander gegenüberliegend angeordnet sind. Dadurch ergibt sich auch eine gewisse Tordierbarkeit des Innenkäfigs 8 gegenüber dem Außenkäfig 3 in Längsrichtung des Befestigungsbolzens.

Weiterhin lässt sich Fig. 2 entnehmen, dass die Eingriffsanordnung 13 über eine Anzahl von, wie bei dem dargestellten Ausführungsbeispiel beispielsweise zwei, Bolzenklauen 18, 19 verfügt, die mit dem Befestigungsbolzen in Eingriff bringbar sind. Die Bolzenklauen 18, 19 liegen diametral einander gegenüber und erstrecken sich jeweils über einen Umfangswinkel von etwa 90 Grad.

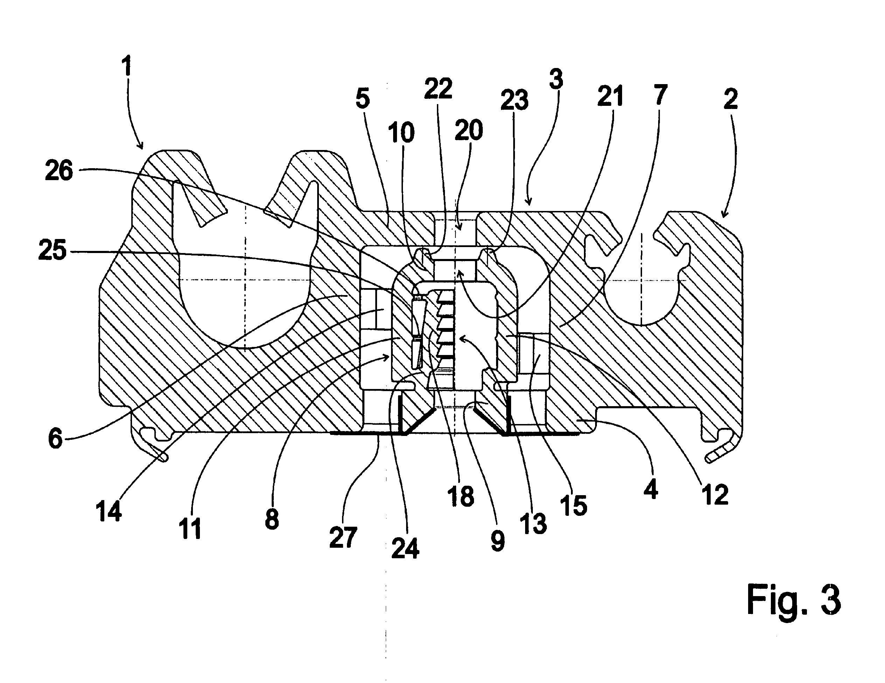

Fig. 3 zeigt das Ausführungsbeispiel gemäß Fig. 1 in einem weiteren Schnitt, der rechtwinklig zu dem Schnitt von Fig. 1 liegt. Aus der Darstellung gemäß Fig. 3 ist ersichtlich, dass die Anbindungsstücke 14, 15, 16, 17 paarweise in zwei Ebenen angeordnet sind. Weiterhin lässt sich aus Fig. 3 erkennen, dass in den Deckteilen 5, 10 des Außenkäfigs 3 beziehungsweise des Innenkäfigs 8 jeweils eine Ausnehmung 20, 21 eingebracht ist, um bei der Herstellung der Vorrichtung durch Einwirken eines Domes die Negativform der Bolzenklauen 18, 19 durch die Deckteile 5, 10 durchzuziehen und den Auswurf der Vorrichtung zu gestatten.

Weiterhin ist Fig. 3 zu entnehmen, dass an dem Deckteil 10 des Innenkäfigs 8 in Richtung des Deckteiles 5 des Außenkäfigs 3 weisende Vorsprünge 22, 23 ausgebildet sind, um die Relativbewegung des Innenkäfigs 8 in Bezug auf den Außenkäfig 3 beim Aufstecken auf einen Befestigungsbolzen in Einführrichtung zu begrenzen.

In der Darstellung gemäß Fig. 3 ist zu erkennen, dass die Bolzenklauen 18, 19 über eine Anzahl von Anbindungsrippen 24, 25, 26 mit dem Innenkäfig 8 in Verbindung stehen.

Weiterhin lässt Fig. 3 entnehmen, dass das Bodenteil 9 des Innenkäfigs 8 auf der Innenseite konisch angeschrägt ist, um beim Aufstecken auf einen Befestigungsbolzen eine Führungswirkung zu erzielen. Um zu vermeiden, dass bei einer anfänglichen Fehlpositionierung der Befestigungsbolzen in den Zwischenraum zwischen dem Außenkäfig 3 und dem Innenkäfig 8 eintreten kann, ist eine Abdeckplatte 27 vorhanden, die mit dem Bodenteil 9 des Innenkäfigs 8 in Verbindung steht und in Bezug auf den Außenkäfig 3 schwimmend gelagert ist. Die Abdeckplatte 27 erstreckt sich von dem Bodenteil 9 des Innenkäfigs 8 radial wenigstens so weit nach außen, dass auch bei den maximal möglichen relativen Bewegungen des Innenteiles 8 in Bezug auf das Außenteil 3 der Zwischenraum zwischen den Bodenteilen 4, 9 abgedeckt ist.

## Patentansprüche

1. Vorrichtung zum Befestigen wenigstens eines Gegenstandes an einem mit einem Länglichen Befestigungsbolzen versehenen Trägerteil mit einer Eingriffsanordnung (13), die mit dem Länglichen Befestigungsbolzen in Eingriff bringbar ist, und mit einem die Eingriffsanordnung (13) umgebenden Außenkäfig (3), wobei die Eingriffsanordnung (13) an einem zur Aufnahme des länglichen Befestigungsbolzens eingerichteten Innenkäfig (8) angebracht ist, der innerhalb des Außenkäfigs (3) angeordnet ist, und wobei der Innenkäfig (8) über eine Anzahl von nach außen gebogenen flexiblen Anbindungsstücken (14, 15, 16, 17) mit dem Außenkäfig (3) verbunden ist, **dadurch gekennzeichnet, dass** insgesamt vier Anbindungsstücke (14, 15, 16, 17) vorhanden sind, die paarweise in zwei in Längsrichtung des Innenkäfigs (8), d.h. in Einführrichtung des länglichen Befestigungsbolzens, zueinander versetzten Ebenen angeordnet sind, wobei die jeweils in einer Ebene liegenden Anbindungsstücke (14, 17; 15, 16) auf einer den Innenkäfig (8) querenden Diagonalen einander gegenüber liegen und in verschiedenen Ebenen liegende Anbindungsstücke (14, 15, 16, 17) außenseitig des Innenkäfigs (8) einander diagonal gegenüberliegend angeordnet sind.

2. Vorrichtung nach Anspruch 1, **dadurch gekennzeichnet, dass** die Eingriffsanordnung (13) eine Anzahl von mit dem Befestigungsbolzen in Eingriff bringbare Bolzenklauen (18, 19) aufweist, die über Anbindungsrippen (24, 25, 26) mit dem Innenkäfig (8) verbunden sind.

3. Vorrichtung nach Anspruch 1 oder Anspruch 2, **dadurch gekennzeichnet, dass** an dem Innenkäfig (8) ein Bodenteil (9) mit einer in Einführrichtung sich konisch verjüngenden Ausnehmung vorhanden ist.

4. Vorrichtung nach Anspruch 3, **dadurch gekennzeichnet, dass** in Einführrichtung von dem Bodenteil (9) eine durch Verbindung mit dem Innenkäfig (8) schwimmend gelagerte, den Zwischenraum zwischen dem Außenkäfig (3) und dem Innenkäfig (8) abdeckende Abdeckplatte (27) vorhanden ist.

5. Vorrichtung nach einem der Ansprüche 1 bis 4, **dadurch gekennzeichnet, dass** sie aus einem geschäumten Kunststoffmaterial hergestellt ist.

6. Vorrichtung nach Anspruch 5, **dadurch gekennzeichnet, dass** das Kunststoffmaterial ein PP/EPDM-Copolymer ist.

## Claims

1. Device for fastening at least one article to a supporting part provided with an elongated fastening pin, having an engaging arrangement (13) which can be brought into engagement with the elongated fastening pin, and having an outer cage (3) surrounding the engaging arrangement (13), the engaging arrangement (13) being mounted in an inner cage (8) which is set up to receive the elongated fastening pin and which is arranged inside the outer cage (3), and the inner cage (8) being connected to the outer cage (3) by a number of outwardly curved flexible connecting portions (14, 15, 16, 17), **characterised in that** there are a total of four connecting portions (14, 15, 16, 17) which are arranged in pairs in two planes which are offset from one another in the longitudinal direction of the inner cage (8), i.e. in the direction in the elongated fastening pin is inserted, those connecting portions (14, 17; 15, 16) which lie in the same plane being situated on a diagonal line across the inner cage (8) and those connecting portions (14, 15, 16, 17) which lie in different planes being arranged on the outside of the inner cage (8) in positions which are diagonally opposite from one another.

2. Device according to claim 1, **characterised in that** the engaging arrangement (13) has a number of claws (18, 19) for a pin which can be brought into engagement with the fastening pin and which are connected to the inner cage (8) by connecting webs (24, 25, 26).

3. Device according to claim 1 or claim 2, **characterised in that** on the inner cage (8) there is a bottom part (9) which tapers in a conical shape in the direction of insertion.

4. Device according to claim 3, **characterised in that**, in the direction in which insertion takes place in the bottom part (9) there is a cover plate (27) which is mounted to float by being connected to the inner cage (8) and which covers the gap between the outer cage (3) and the inner cage (8).

5. Device according to one of claims 1 to 4, **characterised in that** it is produced from an expanded plastics material.

6. Device according to claim 5, **characterised in that** the plastics material is a polypropylene/EPDM copolymer.

## Revendications

1. Dispositif de fixation d'au moins un objet sur un élément faisant office de support muni d'un goujon de fixation oblong, comportant un agencement de mise en prise d'accrochage (13) qui est destiné à être amené en prise d'engagement avec le goujon de fixation oblong, et comportant une cage extérieure (3) entourant l'agencement de mise en prise d'accrochage (13), l'agencement de mise en prise d'accrochage (13) étant en l'occurrence disposé sur une cage intérieure (8) agencée pour recevoir le goujon de fixation oblong et la cage intérieure (8) étant en l'occurrence reliée à la cage extérieure (3) par l'intermédiaire d'un certain nombre de segmentas de raccordement souples cintrés vers l'extérieur (14, 15, 16, 17), **caractérisé en ce qu'**il est prévu au total quatre segments de raccordement (14, 15, 16, 17), qui sont disposés deux par deux dans des plans respectivement opposés dans le sens longitudinal de la cage intérieure (8), c'est-à-dire dans le sens de l'emmanchement du goujon de fixation oblong, les segments de raccordement (14, 15, 16, 17) qui se situent respectivement dans un même plan étant en l'occurrence respectivement disposés en opposition suivant une diagonale traversant la cage intérieure (8) et les segments de raccordement (14, 15, 16, 17) qui se situent dans des plans différents étant en l'occurrence respectivement disposés diamétralement opposés à l'extérieur de la cage intérieure (8).

2. Dispositif selon la revendication 1, **caractérisé en ce que** l'agencement de mise en prise d'accrochage (13) est muni d'un certain nombre d'endentures de réception de goujon (18, 19) qui sont destinées à être amenées en prise d'engagement avec le goujon de fixation, qui sont reliées à la cage intérieure (8) par l'intermédiaire d'ailettes de raccordement (24, 25, 26).

3. Dispositif selon la revendication 1 ou la revendication 2, **caractérisé en ce que** la cage intérieure (8) est munie d'un fond (9) qui comporte, dans le sens de l'emmanchement, un évidement qui va en s'amenuisant suivant un tracé conique.

4. Dispositif suivant la revendication 3, **caractérisé en ce qu'**il est prévu, dans le sens de l'emmanchement en partant du fond (9), une plaquette de recouvrement (27) disposée flottante par l'effet d'une liaison avec la cage intérieure (8), qui recouvre l'espace intermédiaire existant entre la cage extérieure (3) et la cage intérieure (8).

5. Dispositif selon l'une des revendications 1 à 4, **caractérisé en ce qu'**il est réalisé dans un matériau synthétique expansé.

6. Dispositif selon la revendication 5, **caractérisé en ce que** le matériau synthétique utilisé est un copolymère de PP/EPDM.
